# EUROPEAN PATENT APPLICATION

(11) **EP 4 459 144 A1**
(43) Date of publication of application: **06.11.2024**
(21) Application number: 22915615.3
(22) Date of filing: 30.11.2022
(51) Int. Cl.: F16C 19/16, F16C 33/41

(54) **RETAINER AND BEARING DEVICE**

(30) Priority: 28.12.2021 JP 2021213925; 28.12.2021 JP 2021213994
(71) Applicant: NSK Ltd., Tokyo 141-8560 (JP)
(72) Inventor: HAYASHI, Shinichiro, Fujisawa-shi, Kanagawa 251-8501 (JP); SAKODA, Hironari, Fujisawa-shi, Kanagawa 251-8501 (JP); ARAKI, Yasuhiro, Fujisawa-shi, Kanagawa 251-8501 (JP); SATO, Masayuki, Fujisawa-shi, Kanagawa 251-8501 (JP); SHIMAZAKI, Satoshi, Fujisawa-shi, Kanagawa 251-8501 (JP); TAKAHASHI, Daiju, Fujisawa-shi, Kanagawa 251-8501 (JP); YOROZU, Yusuke, Fujisawa-shi, Kanagawa 251-8501 (JP); IMAI, Shingo, Fujisawa-shi, Kanagawa 251-8501 (JP); KIKUCHI, Aya, Fujisawa-shi, Kanagawa 251-8501 (JP)
(74) Representative: SSM Sandmair
(86) International application number: PCT/JP2022/044221
(87) International publication number: WO 2023/127384

(57) **Abstract**

Provided are a retainer cage and a bearing device capable of suppressing fluctuation of torque. A bearing device of the present disclosure includes: an inner ring having an outer circumferential track surface on an outer circumferential surface; an outer ring having an inner circumferential track surface on an inner circumferential surface; a plurality of balls disposed between the outer circumferential track surface and the inner circumferential track surface; and a retainer cage. The retainer cage includes: a plurality of columns disposed between the inner ring and the outer ring of the bearing device and provided at equal intervals in a circumferential direction around an axis of the inner ring; and a plurality of column joints connecting the columns to each other. The portion between the plurality of columns makes a pocket in which the ball is disposed. The column has an end surface facing a direction, being one direction out of axial directions parallel to the axis. The end surface has a recess recessed to the other direction out of the axial directions.

## Description

### Field

The present disclosure relates to a retainer cage and a bearing device.

### Background

A bearing device includes a retainer cage in order to retain a constant interval between balls. An example of the retainer cage is a crown-shaped retainer cage. A crown-shaped retainer cage disclosed in Patent Literature 1 below includes: a plurality of columns provided at equal intervals in a circumferential direction around an axis of an inner ring; and a plurality of column joints connecting the columns to each other. The space between the columns is referred to as a pocket, and a ball is disposed in each pocket. In the retainer cage of Patent Literature 1 described below, the column joint is thicker than the column. With this structure, even when a load in the circumferential direction is input to the column, the retainer cage is hardly broken.

A crown-shaped retainer cage of Patent Literature 2 below includes: a plurality of retaining portions provided at equal intervals in the circumferential direction; and retaining portion joints disposed between the retaining portions. The retaining portion has a U shape (C shape) when viewed in the radial direction. That is, the retaining portion includes: a bottom wall extending in the circumferential direction: and a pair of facing walls extending in axial directions from both ends of the bottom wall in the circumferential direction. A space between the pair of facing walls is referred to as a pocket, and a ball is disposed in the space. The retaining portion joint of the Patent Literature 2 has the same thickness in the radial direction as that of the facing wall, and has high rigidity.

### Citation List

### Patent Literature

Patent Literature 1: JP 3985128 B
Patent Literature 2: JP 2004-84770 A

### Summary

### Technical Problem

Meanwhile, a bearing device receives an input of combined loads including an axial load, a radial load, and a moment load, causing occurrence of slippage on the balls. The balls move in the circumferential direction around the axis of the inner ring, and the speed of their movement changes, that is, decreases or increases (hereinafter referred to as "advance/delay of the ball"). When one ball changes its speed and comes into contact with the column (or the facing wall) of the retainer cage, the relative position between the retainer cage and the ball changes, and another ball and another column (or facing wall) collide with each other in another pocket. This causes the another ball to be pushed by the another column (or the facing wall) to slide with a track surface. This results in fluctuation of the torque from the inner ring to the outer ring (or the torque from the outer ring to the inner ring).

The present disclosure has been formed in view of the above, and aims to provide a retainer cage and a bearing device capable of suppressing fluctuation of torque.

### Solution to Problem

To achieve the above object, a retainer cage according to a first embodiment of the present disclosure comprising: a plurality of columns disposed between an inner ring and an outer ring of a bearing device, the columns provided at equal intervals in a circumferential direction around an axis of the inner ring; and a plurality of column joints connecting the columns to each other, wherein a portion between the plurality of columns forms a pocket in which a ball is disposed, the column has an end surface facing one direction out of axial directions parallel to the axis, and the end surface has a recess recessed to another direction out of the axial directions.

The column has a recess and has low rigidity. Therefore, when the ball changes its speed and comes into contact with the column, the column is deformed to absorb the contact load of the ball. This suppresses the change in the relative position between the retainer cage and the ball due to the contact of the ball, and suppresses the fluctuation of torque.

As a preferable embodiment of the retainer cage, the column has an opening that opens the recess inward in a radial direction. Or the column has a distal end wall to be a bottom wall of the recess. The distal end wall is disposed to be shifted from a center of the ball in the axial directions. Or, the column is provided with a through hole penetrating in the radial direction.

The above configuration further decreases the rigidity of the column, and increases the load that can be absorbed. Accordingly, the fluctuation of the torque is reliably suppressed.

Further, to achieve the above object, A retainer cage according to a second embodiment of the present disclosure comprising: a plurality of retaining portions disposed between an inner ring and an outer ring of a bearing device, the retaining portions provided at equal intervals in a circumferential direction around an axis of the inner ring; and a plurality of retaining portion joints connecting the retaining portions to each other, wherein the retaining portion includes: a bottom wall extending in the circumferential direction; and a pair of facing walls extending in axial directions parallel to the axis from both ends of the bottom wall in the circumferential direction, a space between the pair of facing walls forms a pocket in which a ball is disposed, a thickness of the retaining portion joint in a radial direction is smaller than a thickness of the facing wall in the radial direction when viewed in the axial directions, and when viewed in the axial directions, a central portion of the retaining portion joint in the radial direction is disposed to be shifted inward in the radial direction or outward in the radial direction with respect to a virtual circle passing through a center of each ball.

The retaining portion joint is shifted (offset) in the radial direction with respect to a virtual circle passing through the center of the ball. That is, when a contact load of the ball is input to the facing wall, the retaining portion joint is easily bent. In addition, the retaining portion joint has a thickness smaller than that of the conventional one, and is easily deformed (easily bent). With this structure, when the ball comes into contact with the facing wall, the retaining portion joint is deformed to absorb the contact load of the ball. Accordingly, the present disclosure suppresses a change in the relative position between the retainer cage and the ball due to the contact of the ball, and suppresses the fluctuation of torque.

As a preferable embodiment of the retainer cage, when viewed in the axial directions, the central portion of the retaining portion joint in the radial direction is disposed to be shifted outward in the radial direction with respect to the virtual circle passing through the center of each ball.

The retaining portion joint has a greater length in the circumferential direction and is easily bent when the retaining portion joint is disposed on the outer side in the radial direction than when the retaining portion joint is disposed on the inner side in the radial direction with respect to the virtual circle. This increases the load absorbed by the deformation of the retaining portion joint, making it possible to reliably suppress the fluctuation of torque.

As a preferable embodiment of the retainer cage, the retaining portion joint is bent.

With the above configuration, the retaining portion joint has a shape that is more easily deformed when a load in the circumferential direction is input. The deformation of the retaining portion joint further increases the load to be absorbed, making it possible to reliably suppress the fluctuation of torque.

Further, to achieve the above object, a retainer cage according to a third embodiment of the present disclosure comprising: a plurality of retaining portions disposed between an inner ring and an outer ring of a bearing device, the retaining portions provided at equal intervals in a circumferential direction around an axis of the inner ring; and a plurality of retaining portion joints connecting the retaining portions to each other, wherein the retaining portion includes: a bottom wall extending in the circumferential direction; and a pair of facing walls extending in axial directions parallel to the axis from both ends of the bottom wall in the circumferential direction, a space between the pair of facing walls forms a pocket in which a ball is disposed, and the retaining portion joint is bent.

With the above configuration, the retaining portion joint has a shape that is easily deformed when a load in the circumferential direction is input. Accordingly, the contact load occurring with the ball and input to the facing wall is absorbed by the deformation of the retaining portion joint. This suppresses a change in the relative position between the retainer cage and the ball due to the contact of the ball, and suppresses the fluctuation of torque.

To achieve the above object, a bearing device according to an embodiment of the present disclosure comprising: an inner ring having an outer circumferential track surface on an outer circumferential surface; an outer ring having an inner circumferential track surface on an inner circumferential surface; a plurality of balls disposed between the outer circumferential track surface and the inner circumferential track surface; and the retainer cage above.

The bearing device according to the present disclosure suppresses the change in the relative position between the retainer cage and the ball due to the contact of the ball, and suppresses the fluctuation of torque. Advantageous Effects of Invention

According to the retainer cage and the bearing device of the present disclosure, fluctuations of torque are suppressed.

### Brief Description of Drawings

FIG. 1 is a cross-sectional view of a bearing device according to a first embodiment taken along a radial direction.
FIG. 2 is a perspective view of a retainer cage according to the first embodiment.
FIG. 3 is a cross-sectional view taken along line III-III in FIG. 2 as viewed in the direction of arrows.
FIG. 4 is a cross-sectional view of a bearing device according to a first modification taken along the radial direction.
FIG. 5 is a perspective view of a retainer cage according to the first modification.
FIG. 6 is a cross-sectional view of a bearing device according to a second modification taken along the radial direction.
FIG. 7 is a perspective view of a retainer cage according to the second modification.
FIG. 8 is a perspective view of a retainer cage according to a third modification.
FIG. 9 is a side view of a bearing device according to a second embodiment as viewed from one direction out of axial directions.
FIG. 10 is a perspective view of a retainer cage according to the second embodiment.
FIG. 11 is an enlarged view of a part of the bearing device of FIG. 9.
FIG. 12 is an enlarged view illustrating a case where a ball collides with a facing wall in the bearing device of the second embodiment.
FIG. 13 is an enlarged view of a bearing device according to a fourth modification as viewed in axial directions.
FIG. 14 is an enlarged view of a bearing device of a fifth modification as viewed in the axial directions.
FIG. 15 is a perspective view of a retainer cage according to a third embodiment.
FIG. 16 is a cross-sectional view taken along line XVI-XVI in FIG. 15.
FIG. 17 is an enlarged view illustrating a case where a ball collides with a facing wall in a bearing device of the third embodiment.
FIG. 18 is a perspective view of a retainer cage according to a fourth embodiment.
FIG. 19 is an enlarged view of a bearing device of a sixth modification as viewed in the axial directions. Description of Embodiments

Embodiments of the present invention will be described in detail with reference to the drawings. The present disclosure is not limited by the description in the following. Constituent elements in the following embodiments include elements easily assumed by a person skilled in the art, or equivalents. Moreover, constituent elements in the following embodiments may be appropriately combined with each other.

### (First embodiment)

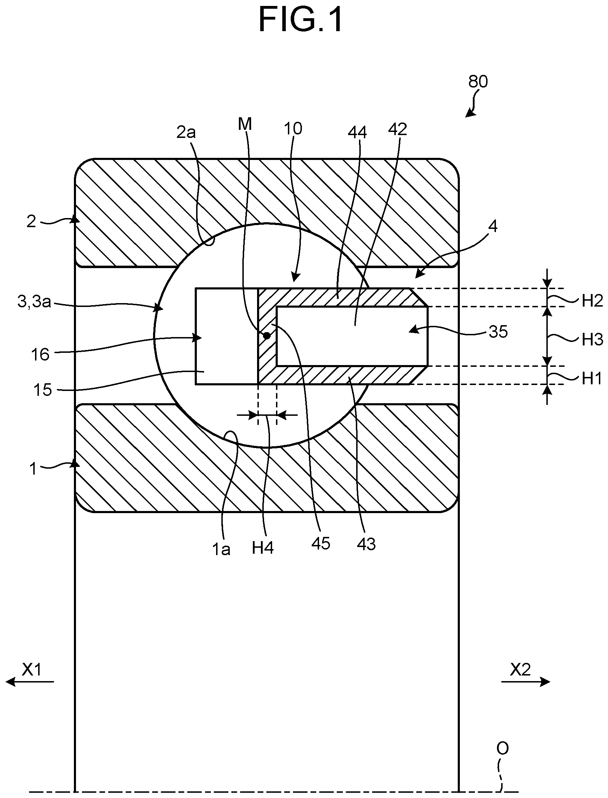

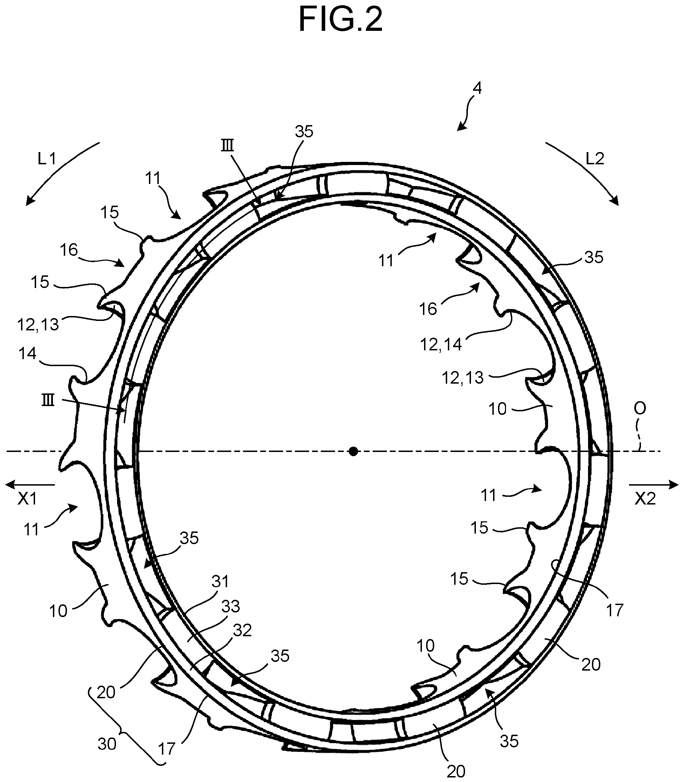

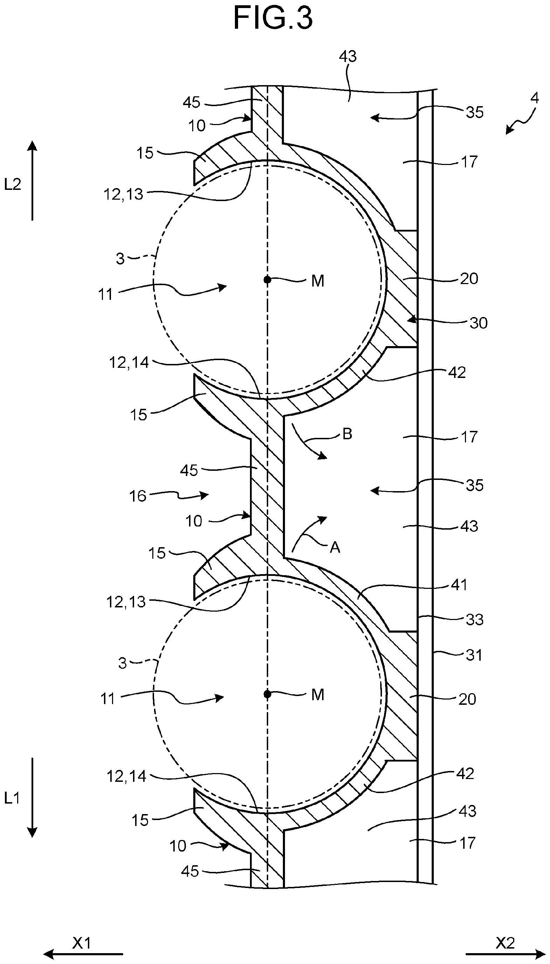

FIG. 1 is a cross-sectional view of a bearing device according to a first embodiment taken along a radial direction. As illustrated in FIG. 1, a bearing device 80 includes: an inner ring 1 having an annular shape; an outer ring 2 having an annular shape and surrounding an outer peripheral side of the inner ring 1; a plurality of balls 3 disposed between the inner ring 1 and the outer ring 2; and a retainer cage 4. In the following description, directions parallel to an axis O of the inner ring 1 are referred to as axial directions. Among rotational directions about the axis O, one direction is referred to as a first rotational direction L1, and a direction opposite to the first rotational direction is referred to as a second rotational direction L2 (refer to arrows in FIGS. 2 and 3).

An outer circumferential surface of the inner ring 1 has an outer circumferential track surface 1a extending in the circumferential direction. An inner circumferential surface of the outer ring 2 has an inner circumferential track surface 2a extending in the circumferential direction. The outer circumferential track surface 1a and the inner circumferential track surface 2a face each other in the radial direction. In the present disclosure, groove shapes of the outer circumferential track surface 1a and the inner circumferential track surface 2a are not particularly limited. That is, the outer circumferential track surface 1a and the inner circumferential track surface 2a may have either a circular arc shape or a Gothic arc shape.

The ball 3 is disposed between the outer circumferential track surface 1a and the inner circumferential track surface 2a. The outer surface (hereinafter, referred to as a rolling surface 3a) of the ball 3 is in contact with each of the outer circumferential track surface 1a and the inner circumferential track surface 2a. The plurality of balls 3 are disposed at equal intervals in the circumferential direction around the axis O. With this configuration, the load acting on the outer ring 2 from the inner ring 1 (or the load acting on the inner ring 1 from the outer ring 2) is uniformly distributed in the circumferential direction.

FIG. 2 is a perspective view of the retainer cage according to the first embodiment. FIG. 3 is a cross-sectional view taken along line III-III in FIG. 2 as viewed in the direction of arrows. The retainer cage 4 is an annular component formed of resin. The present disclosure is not limited to a retainer cage formed of resin. As illustrated in FIG. 2, the retainer cage 4 includes: a plurality of columns 10 evenly disposed in the circumferential direction about the axis O; and column joints 20 disposed between the columns 10 to connect the columns 10 to each other.

The portion between the columns 10 adjacent to each other in the circumferential direction forms a space referred to as a pocket 11. As illustrated in FIG. 3, a ball 3 is disposed in each pocket 11. Accordingly, the column 10 is interposed between the balls 3. As a result, contact between the balls 3 is avoided. The pocket 11 has one direction out of the axial directions open, and has the other direction out of the axial directions closed with the column joint 20 disposed. Hereinafter, among the axial directions, the direction in which the pocket 11 is open is referred to as a first direction X1, and a direction opposite to the first direction X1 is referred to as a second direction X2.

The column 10 has two facing surfaces 12 each being a side surface facing the circumferential direction (toward the pocket 11) and each facing the rolling surface 3a of the ball 3. The two facing surfaces 12 include: a first facing surface 13 facing the first rotational direction L1; and a second facing surface 14 facing the second rotational direction. The first facing surface 13 and the second facing surface 14 each are spherical surfaces in order to reduce sliding resistance with the ball 3.

At an end of the column 10 in the first direction X1, there is provided a pair of claws 15. With this configuration, the first facing surface 13 and the second facing surface 14 are expanded in the first direction X1. This also suppresses the fall of the ball 3 out of each pocket 11 in the first direction X1. Between the pair of claws 15, there is provided a notch 16.

An end of the column 10 in the second direction X2 (hereinafter, referred to as a bottom 17) is connected to the column joint 20. Therefore, the bottoms 17 of the columns 10 and the column joints 20 are alternately arranged in the circumferential direction to form an annular portion 30. As illustrated in FIG. 2, the side surface of the annular portion 30 in the second direction X2 includes: a first rib 31 having an annular shape and located closer to the inner side in the radial direction; a second rib 32 having an annular shape and located closer to the outer side in the radial direction; and an end surface 33 having an annular planar shape and located between the first rib 31 and the second rib 32.

The bottom 17 of the column 10 is provided with a recess 35 recessed from the end surface 33 in the first direction X1. The recess 35 is disposed at equal intervals in the circumferential direction, and is provided as many as the columns 10. Therefore, the column 10 is thinned and lightened by the recess 35, and has a decreased rigidity.

Because of the presence of the recesses 35, the column 10 includes a plurality of walls. Specifically, as illustrated in FIG. 3, the column 10 includes: a first wall 41 in the first rotational direction L1 as viewed from the recess 35; a second wall 42 in the second rotational direction L2 as viewed from the recess 35; an inner circumferential wall 43 located on an inner side in the radial direction as viewed from the recess 35; an outer circumferential wall 44 (refer to FIG. 1) located on the outer side in the radial direction as viewed from the recess 35; and a distal end wall 45 located in the first direction X1 as viewed from the recess 35.

As illustrated in FIG. 1, a thickness H1 of the inner circumferential wall 43 in the radial direction and a thickness H2 of the outer circumferential wall 44 in the radial direction are smaller than a width H3 of the recess 35 in the radial direction. This leads to a low support rigidity by the inner circumferential wall 43 and the outer circumferential wall 44. The distal end wall 45 is a bottom wall of the recess 35, and is located in the circumferential direction with respect to a center M of the ball 3. The thickness H4 of the distal end wall 45 in the axial directions is substantially the same as the thickness H1 of the inner circumferential wall 43 and the thickness H2 of the outer circumferential wall 44.

As described above, according to the bearing device 80 of the first embodiment, when advance/delay of the ball 3 occurs, the ball 3 collides with the first facing surface 13 (the first wall 41). This deforms the inner circumferential wall 43, the outer circumferential wall 44, and the distal end wall 45, which are walls supporting the first wall 41, making the first wall 41 fall down toward the recess 35 (refer to arrow A in FIG. 3). Therefore, the collision load input to the first wall 41 is absorbed.

When the ball 3 collides with the second facing surface 14 (second wall 42), the inner circumferential wall 43, the outer circumferential wall 44, and the distal end wall 45 are deformed, and the second wall 42 falls down toward the recess 35 (refer to arrow B in FIG. 3). Therefore, the collision load input to the second wall 42 is absorbed. As described above, even with occurrence of advance/delay of the ball 3, the relative position between the retainer cage 4 and the ball 3 does not change, making it possible to suppress the fluctuation of torque.

As described above, the bearing device 80 of the first embodiment includes: the inner ring 1 in which the outer circumferential track surface 1a is provided on the outer circumferential surface; the outer ring 2 in which the inner circumferential track surface 2a is provided on the inner circumferential surface; the plurality of balls 3 disposed between the outer circumferential track surface 1a and the inner circumferential track surface 2a; and the retainer cage 4. The retainer cage 4 includes: the plurality of columns 10 disposed between the inner ring 1 and the outer ring 2 and provided at equal intervals in the circumferential direction around the axis O of the inner ring 1; and the plurality of column joints 20 connecting the columns 10 to each other. The portion between the plurality of columns 10 forms a pocket 21 in which the ball 3 is disposed. The column 10 has the end surface 33 facing a direction, being one direction out of the axial directions parallel to the axis O. The end surface 33 has the recess 35 recessed to the other direction out of the axial directions.

The retainer cage 4 of the first embodiment suppresses the change in the relative position of the retainer cage 4 and the ball 3 due to the contact of the ball 3. Accordingly, the fluctuation of the torque is suppressed.

Next, a modification including a modified version of the retainer cage 4 of the first embodiment will be described. In the following description, only differences from the retainer cage 4 of the first embodiment will be described.

### (First modification)

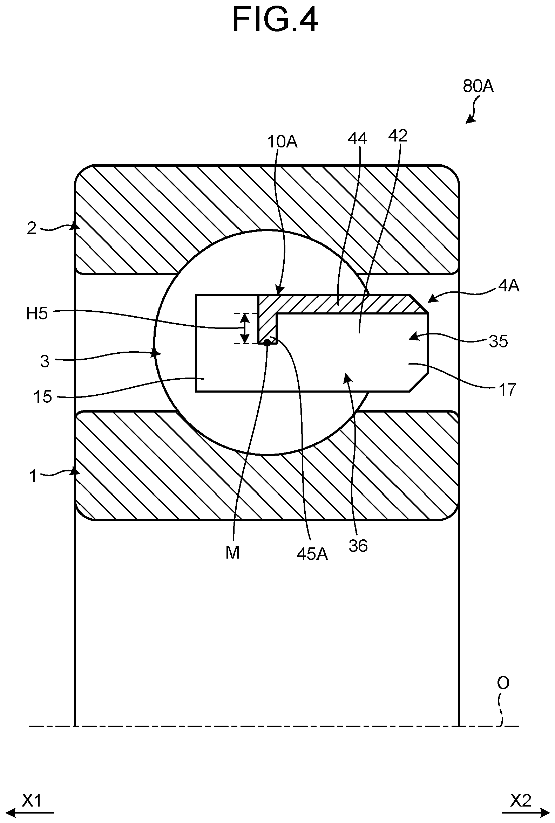

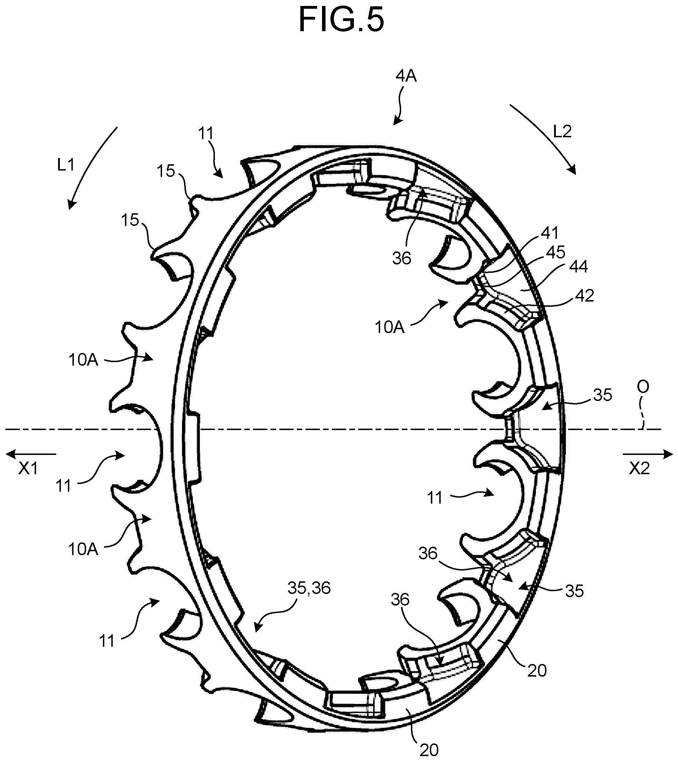

FIG. 4 is a cross-sectional view of a bearing device according to a first modification taken along the radial direction. FIG. 5 is a perspective view of a retainer cage according to the first modification. As illustrated in FIGS. 4 and 5, a retainer cage 4A according to the first modification is different from the retainer cage 4 of the first embodiment in having an opening 36 that opens the recess 35 inward in the radial direction. In other words, a column 10A of the retainer cage 4A according to the first modification is different from the retainer cage 4 according to the first embodiment in having no inner circumferential wall 43 positioned inward in the radial direction as viewed from the recess 35. Therefore, the rigidity of the column 10A of the first modification is lower than the rigidity of the column 10 of the first embodiment.

In addition, a length H5 (refer to FIG. 5) of the distal end wall 45A of a column 10A in the radial direction according to the first modification is shorter than the length of the distal end wall 45 in the radial direction according to the first embodiment. Therefore, the rigidity of the column 10A is further decreased.

From the above, according to the retainer cage 4A of the first modification, the column 10A has a decreased rigidity, leading to an increase in the load that can be absorbed. Therefore, the contact load input to the column 10A is reliably absorbed, and the fluctuation of the torque is reliably suppressed.

Incidentally, although the opening 36 of the first modification opens the recess 35 inward in the radial direction, the present disclosure may form an opening that opens the recess outward in the radial direction.

### (Second modification)

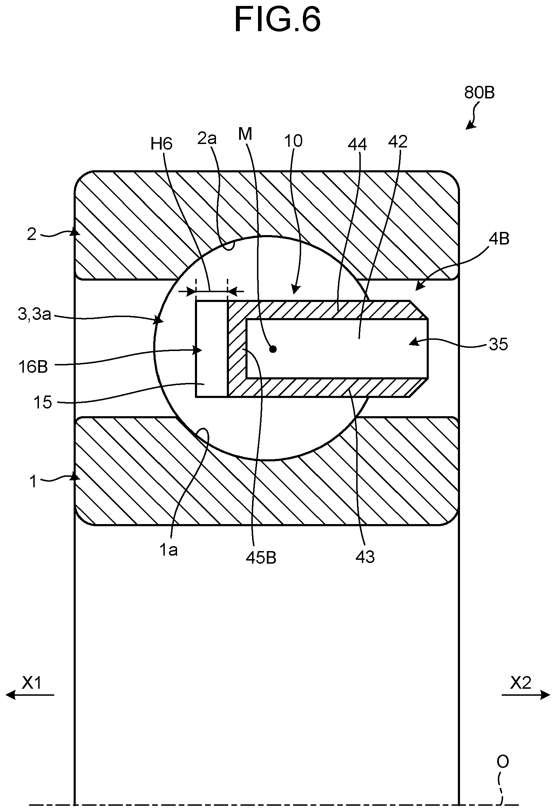

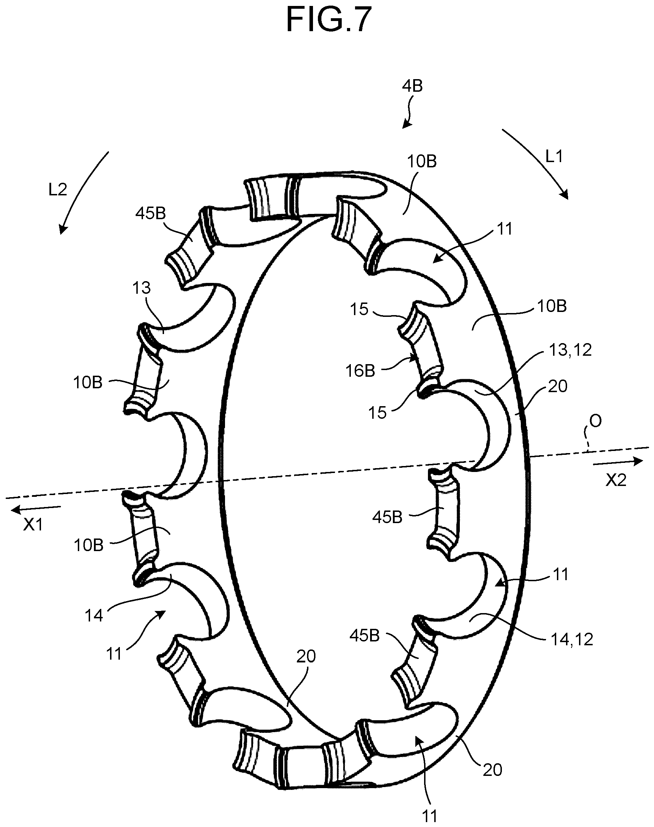

FIG. 6 is a cross-sectional view of a bearing device according to a second modification taken along the radial direction. FIG. 7 is a perspective view of a retainer cage according to the second modification. As illustrated in FIGS. 6 and 7, a retainer cage 4B of a bearing device 80B according to the second modification is different from the retainer cage 4 of the first embodiment in that a distal end wall 45B is shifted from the center M of the ball in the first direction X1.

According to the retainer cage 4B of the second modification, the support strength of the distal end wall 45 supporting the first wall 41 and the second wall 42 is decreased. This increases the deformation amount of the first wall 41 and the second wall 42 when the balls 3 come into contact with each other (that is, increases the load that can be absorbed), making it possible to reliably suppress the fluctuation of torque.

In the retainer cage 4B of the second modification, the distal end wall 45 moves in the first direction X1. Therefore, a notch amount H6 (refer to FIG. 6) of a notch 16B is smaller than that of the notch 16 of the first embodiment.

### (Third modification)

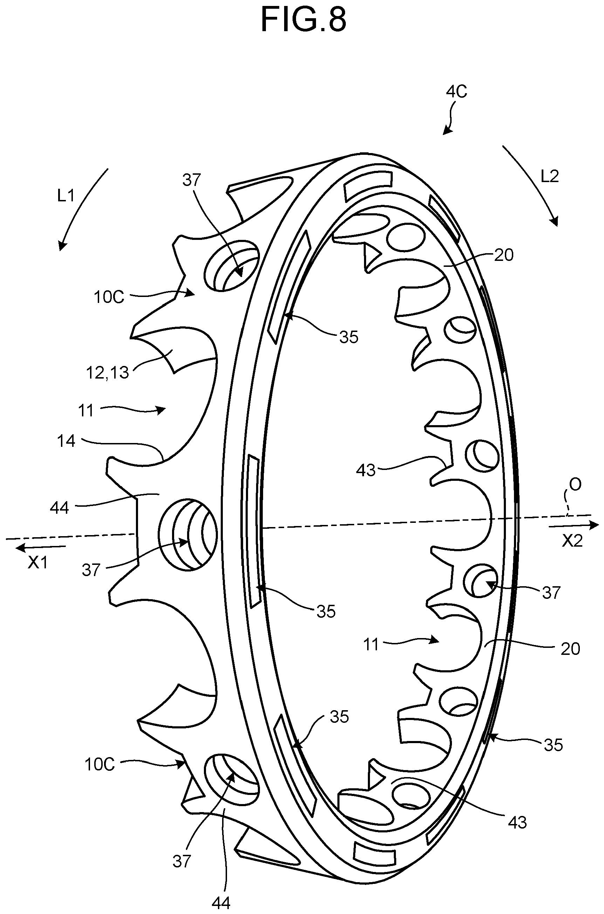

FIG. 8 is a perspective view of a retainer cage according to a third modification. A retainer cage 4C of the third modification is different from the retainer cage 4 of the first embodiment in that a through hole 37 penetrating in the radial direction is provided in a column 10C. Specifically, the through hole 37 has a circular cross-sectional shape. The through hole 37 penetrates the inner circumferential wall 43 and the outer circumferential wall 44. Accordingly, the recess 35 communicates with the inner side in the radial direction and the outer side in the radial direction via the through hole 37.

As described above, the retainer cage 4C of the third modification has a decreased support strength of the inner circumferential wall 43 and the outer circumferential wall 44 supporting the first wall 41 and the second wall 42. This increases the deformation amount of the first wall 41 and the second wall 42 when the balls 3 come into contact with each other (that is, increases the load that can be absorbed), making it possible to reliably suppress the fluctuation of torque.

Although the retainer cage and the bearing device according to the embodiment and the modification have been described above, the present invention is not limited to the above example. For example, although the recess 35 of the embodiment is recessed in the first direction from the bottom 17 of the column 10, it is also allowable to provide a recess recessed in the second direction X2 on the end surface of the distal end wall 45 of the column 10 facing the first direction X1. Next, a second embodiment will be described.

### (Second embodiment)

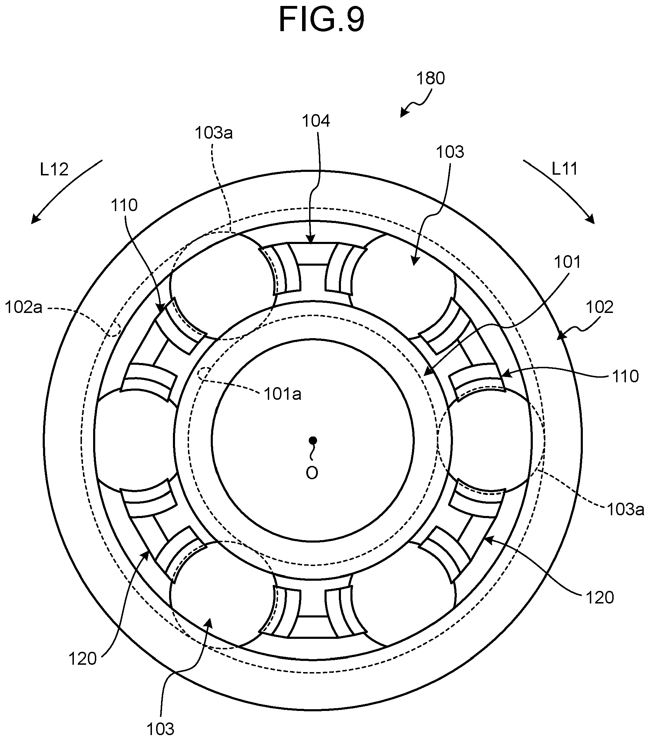

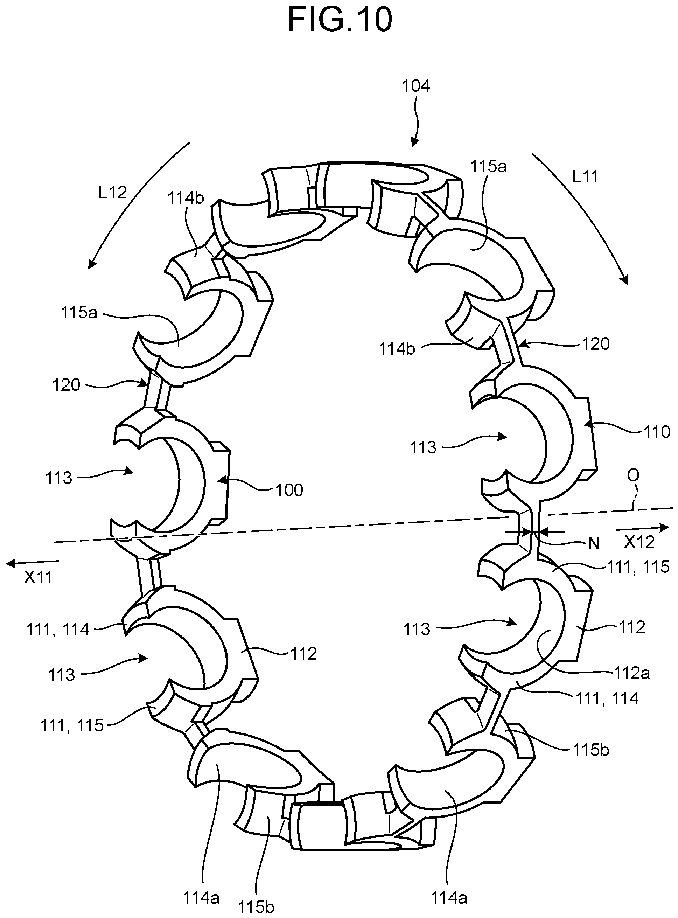

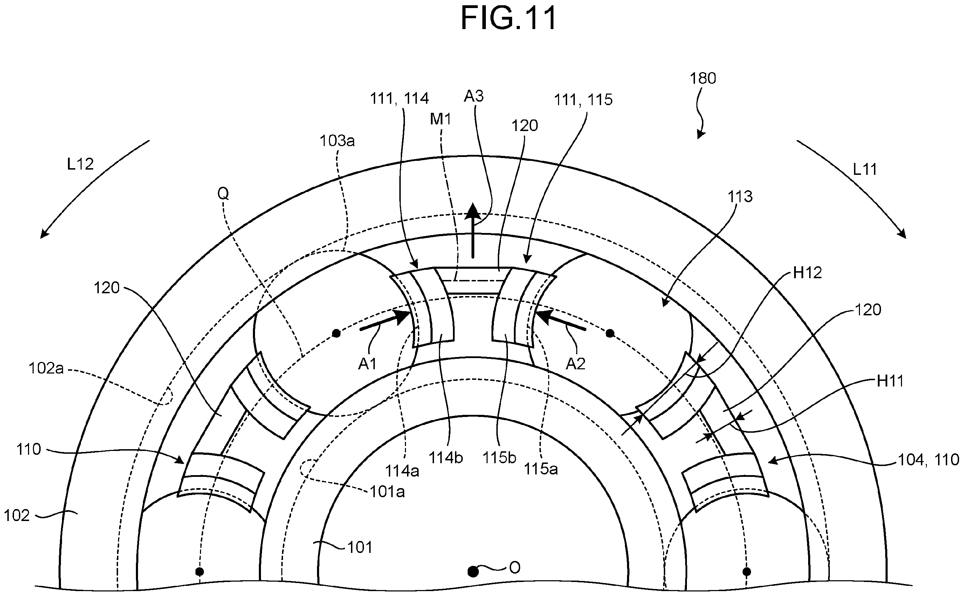

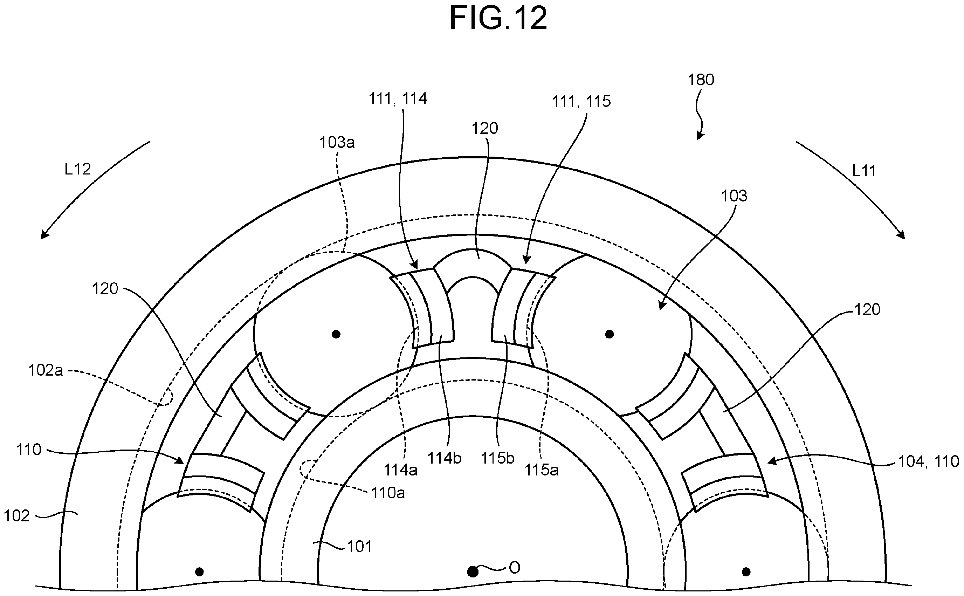

FIG. 9 is a side view of a bearing device according to a second embodiment as viewed from one direction out of the axial directions. FIG. 10 is a perspective view of a retainer cage according to the second embodiment. FIG. 11 is an enlarged view of a part of the bearing device of FIG. 9. FIG. 12 is an enlarged view illustrating a case where a ball collides with a facing wall in the bearing device of the second embodiment.

As illustrated in FIG. 9, a bearing device 180 includes: an inner ring 101 having an annular shape; an outer ring 102 having an annular shape and surrounding an outer peripheral side of the inner ring 101; a plurality of balls 103 disposed between the inner ring 101 and the outer ring 102; and a retainer cage 104. In the following description, directions parallel to an axis O of the inner ring 101 are referred to as axial directions. Among rotational directions about the axis O, one direction is referred to as a first rotational direction L11, and a direction opposite to the first rotational direction L11 is referred to as a second rotational direction L12.

An outer circumferential surface of the inner ring 101 has an outer circumferential track surface 101a extending in the circumferential direction. An inner circumferential surface of the outer ring 102 has an inner circumferential track surface 102a extending in the circumferential direction. The outer circumferential track surface 101a and the inner circumferential track surface 102a face each other in the radial direction. In the present disclosure, groove shapes of the outer circumferential track surface 101a and the inner circumferential track surface 102a are not particularly limited. That is, the outer circumferential track surface 101a and the inner circumferential track surface 102a may have either a circular arc shape or a Gothic arc shape.

The ball 103 is disposed between the outer circumferential track surface 101a and the inner circumferential track surface 102a. The outer surface (hereinafter, referred to as a rolling surface 103a) of the ball 103 is in contact with each of the outer circumferential track surface 101a and the inner circumferential track surface 102a. The plurality of balls 103 are disposed at equal intervals in the circumferential direction around the axis O. With this configuration, the load acting on the outer ring 102 from the inner ring 101 (or the load acting on the inner ring 101 from the outer ring 102) is uniformly distributed in the circumferential direction.

The retainer cage 104 is an annular component formed of resin. The present disclosure is not limited to a retainer cage formed of resin. As illustrated in FIG. 10, the retainer cage 104 includes: a plurality of retaining portions 110 evenly disposed in the circumferential direction about the axis O; and a retaining portion joint 120 that is disposed between the retaining portions 110 and connects the retaining portions 110 to each other.

The retaining portion 110 has a pair of facing walls 111 extending in the axial directions and a bottom wall 112 extending in the circumferential direction. The pair of facing walls 111 is spaced apart from each other in the circumferential direction. The bottom wall 112 connects ends of the two facing walls 111 in the axial directions. Accordingly, when viewed in the radial direction, the retaining portion 110 has a U shape (C shape) opening to one direction out of the axial directions. The space inside the retaining portion 110 is referred to as a pocket 113 in which the ball 103 is disposed.

Of the two facing walls 111, the facing wall 111 disposed in a first rotational direction L11 as viewed from the pocket 113 is referred to as a first facing wall 114, while the facing wall 111 disposed in a second rotational direction L12 is referred to as a second facing wall 115. The first facing wall 114 has side surfaces facing the circumferential direction, specifically, a first facing surface 114a facing the pocket 113 and a first outer circumferential surface 114b facing a direction opposite to the pocket 113. Similarly, the second facing wall 115 has a second facing surface 115a facing the pocket 113 and a second outer circumferential surface 115b facing the direction opposite to the pocket 113. The bottom wall 112 has a bottom surface 113a facing a first direction X11 (toward the pocket 113). The bottom surface 113a, the first facing surface 114a, and the second facing surface 115a are each formed as spherical surfaces in order to reduce sliding resistance with the ball 103.

The retaining portion joint 120 extends in the circumferential direction. An end of the retaining portion joint 120 in the first rotational direction L11 is connected to the second outer circumferential surface 115b of the second facing wall 115. An end of the retaining portion joint 120 in the second rotational direction L12 is connected to the first outer circumferential surface 114b of the first facing wall 114.

A length N in the axial directions (refer to FIG. 10) of the retaining portion joint 120 is shorter than the length of the facing wall 111 in the axial directions. That is, the retaining portion joint 120 connects not all of the first facing wall 114 and the second facing wall 115 in the axial directions but only a part of these walls in the axial directions. This lead to low rigidity of the retaining portion joint 120.

As illustrated in FIG. 11, the retaining portion joint 120 extends as a straight line in the circumferential direction when viewed in the axial directions. The retaining portion joint of the present disclosure is not particularly limited, that is, it may have an arc shape when viewed in the axial directions. A virtual line M1 in FIG. 11 is a line passing through the central portion of the retaining portion joint 120 in the radial direction. The retaining portion joint 120 has a substantially trapezoidal shape in which an outer side in the radial direction is longer than an inner side in the radial direction when viewed in the axial directions. A thickness H11 of the retaining portion joint 120 in the radial direction is smaller than a thickness H12 of the facing wall 111 in the radial direction. This lead to low rigidity of the retaining portion joint 120.

The retaining portion joint 120 is connected to the outer side in the radial direction with respect to the first outer circumferential surface 114b and the second outer circumferential surface 115b. That is, the central portion of the retaining portion joint 120 in the radial direction is disposed outward in the radial direction with respect to a virtual circle Q passing through the center of each ball 103. With this configuration, when a compressive load of bringing the two retaining portions 110 adjacent in the circumferential direction to mutually closer positions acts on the retaining portion joint 120 (refer to arrows A1 and A2 in FIG. 11), the retaining portion joint 120 receives a load to be pushed outward in the radial direction (refer to an arrow A3 in FIG. 11).

As described above, when advance/delay of the ball 103 occurs in the second embodiment, the ball 103 collides with the first facing surface 114a (first facing wall 114) or the second facing surface 115a (second facing wall 115). This causes, as illustrated in FIG. 12, the retaining portion joint 120 to be deformed to bend outward in the radial direction. This absorbs the collision load input to the first facing wall 114 or the second facing wall 115. Accordingly, there is no change in the rotational speed of the retainer cage 104, leading to no change in the relative position between the retainer cage 104 and the ball 103.

As described above, the bearing device 180 of the second embodiment includes: the inner ring 101 in which the outer circumferential track surface 101a is provided on the outer circumferential surface; the outer ring 102 in which the inner circumferential track surface 102a is provided on the inner circumferential surface; the plurality of balls 103 disposed between the outer circumferential track surface 101a and the inner circumferential track surface 102a; and the retainer cage 104. The retainer cage 104 includes: a bottom wall 112 extending in the circumferential direction; and the pair of facing walls 111 extending in the axial directions parallel to the axis O from both ends of the bottom wall 112 in the circumferential direction. The space between the pair of facing walls 111 forms the pocket 113 in which the ball 103 is disposed. When viewed in the axial directions parallel to the axis O, the thickness H11 of the retaining portion joint 120 in the radial direction is smaller than the thickness H12 of the facing wall 111 in the radial direction. When viewed in the axial directions parallel to the axis O, the central portion in the radial direction of the retaining portion joint 120 is disposed to be shifted outward in the radial direction with respect to a virtual circle Q passing through the center of each ball 103.

According to the bearing device 180 of the second embodiment, the change in the relative position between the retainer cage 104 and the ball 103 is suppressed even with occurrence of advance/delay of the ball 103. Accordingly, the fluctuation of the torque is suppressed.

Next, a modification including a modified version of the retainer cage 104 of the second embodiment will be described. In the following description, only differences from the retainer cage 104 of the second embodiment will be described.

### (Fourth modification)

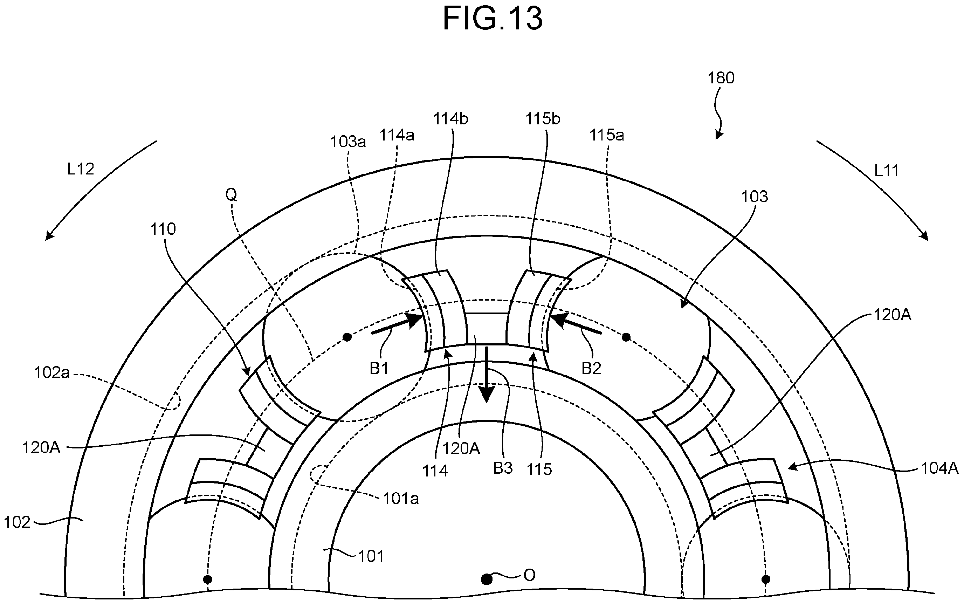

FIG. 13 is an enlarged view of a bearing device according to a fourth modification as viewed in the axial directions. As illustrated in FIG. 13, a retainer cage 104A according to the fourth modification is different from the retainer cage 104 of the second embodiment in including a retaining portion joint 120A instead of the retaining portion joint 120. The retaining portion joint 120A is disposed on the inner side in the radial direction with respect to the virtual circle Q. Note that the thickness of the retaining portion joint 120A in the radial direction is the same as the thickness H11 (refer to FIG. 11) of the retaining portion joint 120 of the second embodiment in the radial direction, and is smaller than the thickness H12 (refer to FIG. 11) of the facing wall 111 in the radial direction.

As described above, according to the fourth modification, when a compressive load that brings two retaining portions 110 adjacent in the circumferential direction to mutually closer positions acts on the retaining portion joint 120A (refer to arrows B1, B2 in FIG. 13), the retaining portion joint 120A receives a load to be pushed inward in the radial direction (refer to an arrow B3 in FIG. 13). As a result, the retaining portion joint 120A is deformed so as to absorb the collision load input to the first facing wall 114 or the second facing wall 115. Therefore, similarly to the second embodiment, the fluctuation of torque is suppressed.

In this manner, in the retaining portion joint of the present disclosure, the central portion of the retaining portion joint 120 in the radial direction is to be preferably disposed to be shifted outward in the radial direction or inward in the radial direction with respect to the virtual circle Q passing through the center of each ball 103. However, compared to the retaining portion joint 120A of the fourth modification, the retaining portion joint 120 of the second embodiment has a greater length in the circumferential direction and thus is more easily deformed. Therefore, the retaining portion joint 120 of the second embodiment has a larger load that can be absorbed by deformation, and thus is a further preferable mode.

### (Fifth modification)

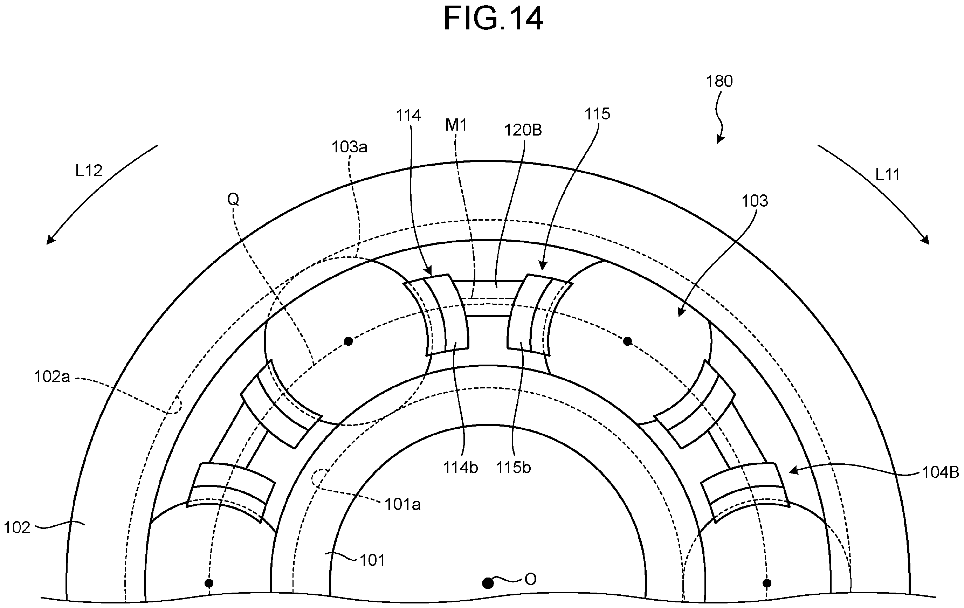

FIG. 14 is an enlarged view of a bearing device of a fifth modification as viewed in the axial directions. As illustrated in FIG. 14, a retainer cage 104B according to the fifth modification is different from the retainer cage 104 of the second embodiment in including a retaining portion joint 120B instead of the retaining portion joint 120. When viewed in the axial directions, the retaining portion joint 120B overlaps with the virtual circle Q. However, the central portion in the radial direction of the retaining portion joint 120B is disposed on the outer side in the radial direction than the virtual circle Q. Therefore, when a compressive load in the circumferential direction acts on the retaining portion joint 120B, the retaining portion joint 120B receives a load pushed outward in the radial direction and bends outward in the radial direction. Therefore, even when advance/delay of the ball 103 occurs in the fifth modification, the retaining portion joint 120B is deformed to absorb the contact load of the ball 103. Therefore, similarly to the second embodiment, the fluctuation of torque is suppressed.

In this manner, in the retaining portion joint of the present disclosure, when viewed in the axial directions parallel to the axis O, there is no need to locate the retaining portion joint not to overlap with the virtual circle Q, and it is only necessary to locate the central portion (refer to the virtual line M1) of the retaining portion joint in the radial direction to be shifted outward or inward in the radial direction with respect to the virtual circle Q. However, the more separated the central portion in the radial direction of the retaining portion joint from the virtual circle Q, the larger the amount of bending of the retaining portion joint. Therefore, the retaining portion joint 120 of the second embodiment has a larger load that can be absorbed by deformation, and thus is a further preferable mode.

### (Third embodiment)

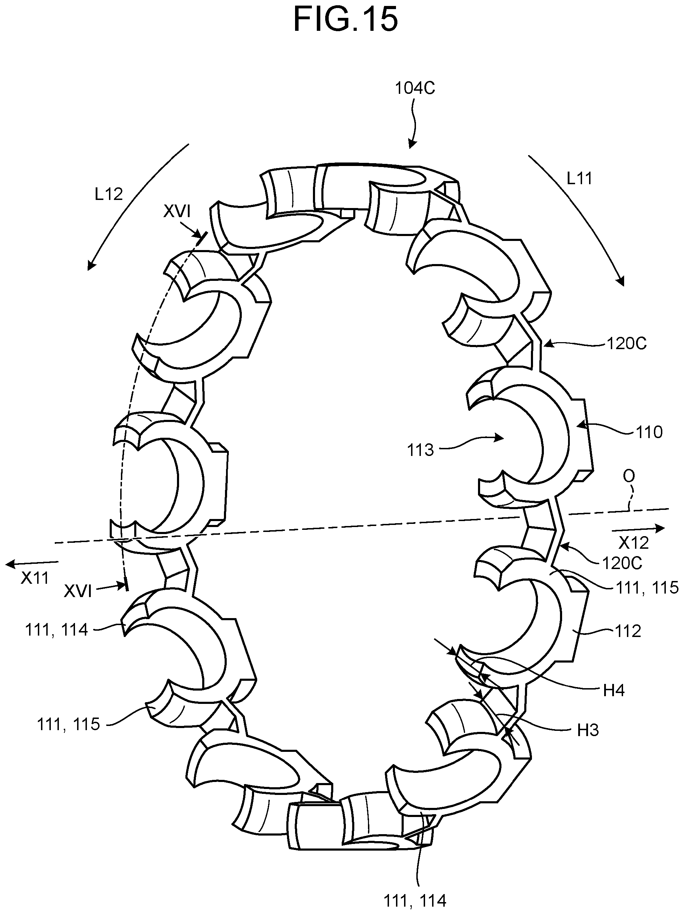

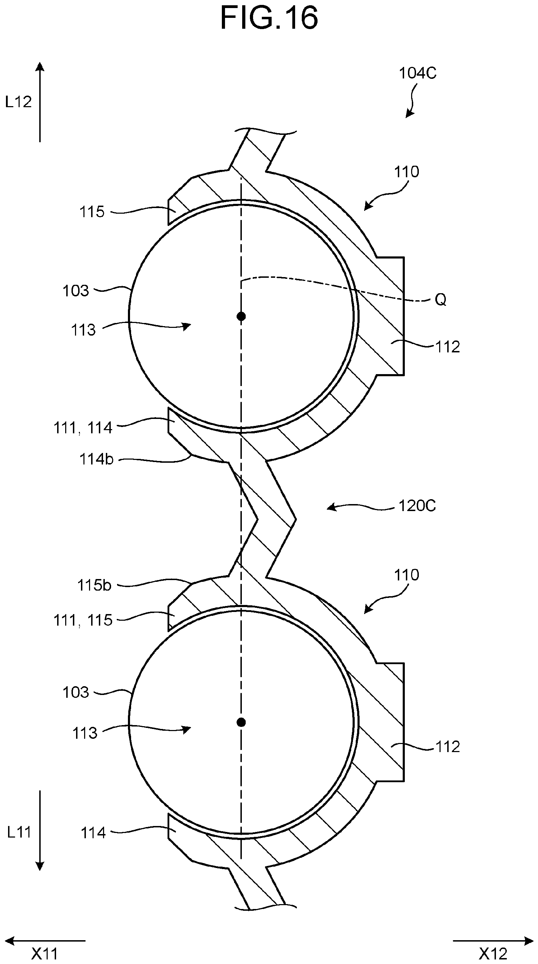

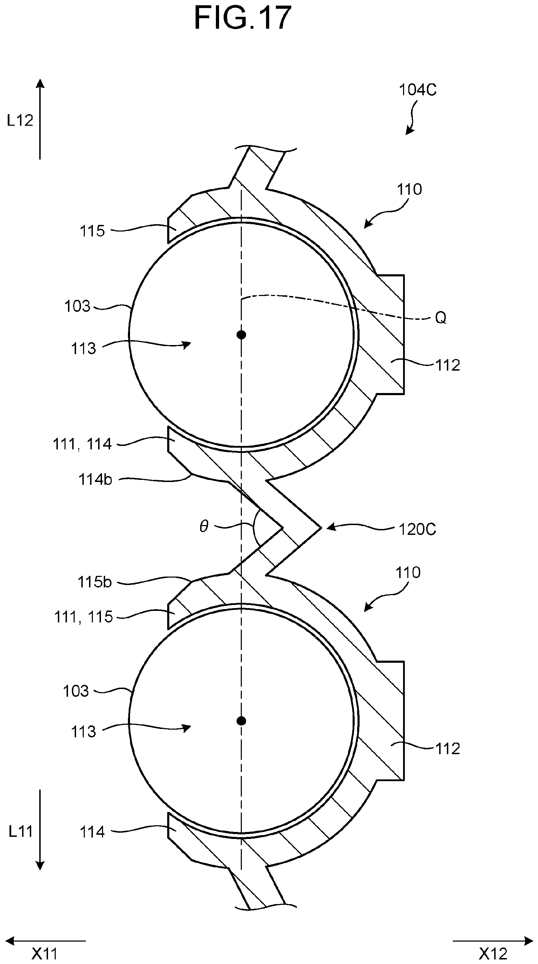

FIG. 15 is a perspective view of a retainer cage according to a third embodiment. FIG. 16 is a cross-sectional view taken along line XVI-XVI in FIG. 15. FIG. 17 is an enlarged view illustrating a case where a ball collides with a facing wall in a bearing device of the third embodiment. As illustrated in FIG. 15, a retainer cage 104C according to the third embodiment is different from the retainer cage of the second embodiment in that a retaining portion joint 120C is provided instead of the retaining portion joint 120.

A thickness H3 of the retaining portion joint 120C in the radial direction is the same as a thickness H4 of the facing wall 111 in the radial direction. In other words, the central portion of the retaining portion joint 120C in the radial direction overlaps with a virtual circle Q (not illustrated in FIG. 15. Refer to FIG. 16) connecting centers of the balls 103. Accordingly, even when having received a compressive load in the circumferential direction as in the second embodiment, the retaining portion joint 120C is not to be deformed to bend outward in the radial direction or inward in the radial direction.

The retaining portion joint 120C is bent to be located more in the second direction X12 from the end toward the central portion in the circumferential direction. That is, when viewed in the radial direction, the retaining portion joint 120C has a V shape. Therefore, when the retaining portion joint 120C receives a compressive load in the circumferential direction, as illustrated in FIG. 17, the retaining portion joint 120C is deformed so as to decrease a bending angle θ of the retaining portion joint 120C. From the above, when advance/delay of the ball 103 occurs in the third embodiment, the retaining portion joint 120C is deformed to absorb the contact load of the ball 103. Therefore, similarly to the second embodiment, the fluctuation of torque is suppressed.

The retaining portion joint 120C of the third embodiment is bent so as to be located more in the second direction X12 from the end toward the central portion in the circumferential direction, but the location of the retaining portion joint of the present disclosure is not limited thereto. For example, the retaining portion joint may be disposed in the first direction X11 or may be disposed inward in the radial direction or outward in the radial direction from the end toward the central portion in the circumferential direction. The bent shape of the retaining portion joint of the present disclosure is not limited to the V shape. For example, the shape may be an arc shape, a U shape, a W shape, or the like. That is, the retaining portion joint is not particularly limited as long as the retaining portion joint has a shape other than a straight line.

### (Fourth embodiment)

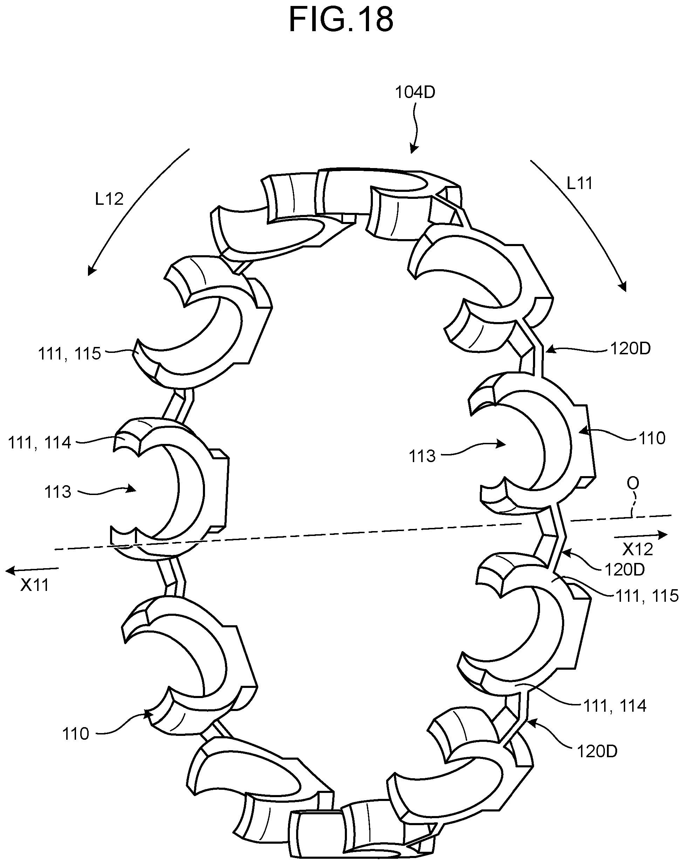

FIG. 18 is a perspective view of a retainer cage according to a fourth embodiment. A retainer cage 104D of the fourth embodiment is different from the retainer cage 104 of the second embodiment in including a retaining portion joint 120D instead of the retaining portion joint 120. The thickness of the retaining portion joint 120D in the radial direction is the same as the thickness H11 (refer to FIG. 11) in the radial direction of the retaining portion joint 120 of the second embodiment. That is, the thickness of the retaining portion joint 120D in the radial direction is smaller than the thickness H12 of the facing wall 111 in the radial direction. In addition, the retaining portion joint 120D is different from the retaining portion joint 120 in that the retaining portion joint 120D is bent when viewed in the radial direction. Therefore, when having received a compressive load in the circumferential direction, the retaining portion joint 120D is more easily deformed than the retaining portion joint 120 of the second embodiment. Specifically, the retaining portion joint 120D is deformed to bend outward in the radial direction and so as to decrease the bending angle of the retaining portion joint 120D. As described above, according to the fourth embodiment, a larger contact load can be absorbed, and the fluctuation of torque is suppressed.

### (Sixth modification)

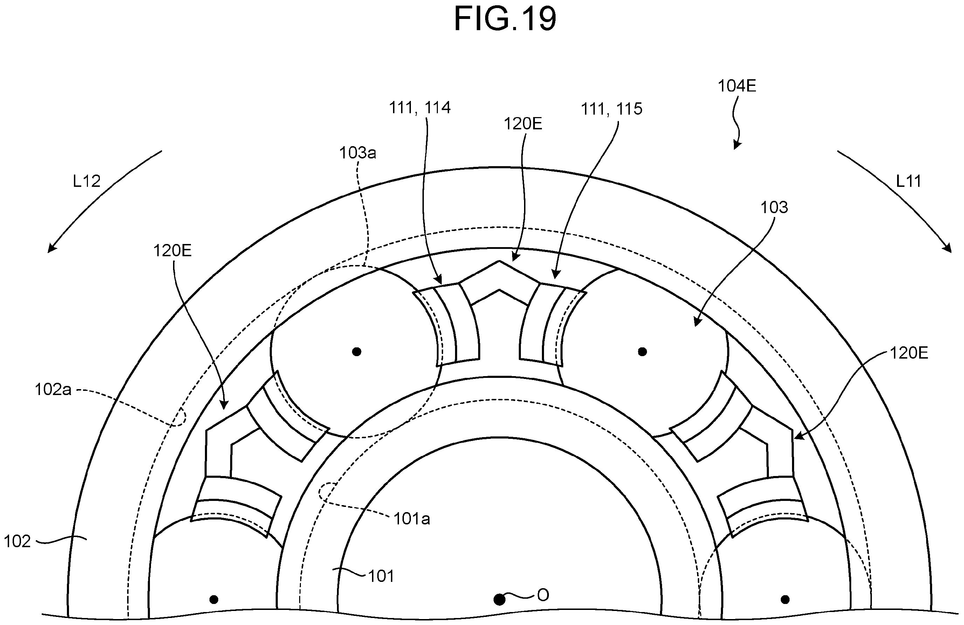

FIG. 19 is an enlarged view of a bearing device of a sixth modification as viewed in the axial directions. A retaining portion joint 120E of a retainer cage 104E of the sixth modification is different from the case of the fourth embodiment in that the bending direction of the retaining portion joint 120D is changed. Specifically, the retaining portion joint 120E is bent so as to be disposed outward in the radial direction from both ends toward the central portion in the circumferential direction. Also in the sixth modification, similarly to the fourth embodiment, a larger contact load can be absorbed to suppress the fluctuation of torque.

### Reference Signs List

- 1: INNER RING
- 1a: OUTER CIRCUMFERENTIAL TRACK SURFACE
- 2: OUTER RING
- 2a: INNER CIRCUMFERENTIAL TRACK SURFACE
- 3: BALL
- 4, 4A, 4B: RETAINER CAGE
- 3a: ROLLING SURFACE
- 10, 10A: COLUMN
- 11: POCKET
- 12: FACING SURFACE
- 13: FIRST FACING SURFACE
- 14: SECOND FACING SURFACE
- 17: BOTTOM
- 20: COLUMN JOINT
- 30: ANNULAR PORTION
- 33: END SURFACE
- 35: RECESS

- 36: OPENING
- 37: THROUGH HOLE
- 41: FIRST WALL
- 42: SECOND WALL
- 43: INNER CIRCUMFERENTIAL WALL
- 44: OUTER CIRCUMFERENTIAL WALL
- 45, 45A, 45B: DISTAL END WALL
- 80, 80A, 80B: BEARING DEVICE
- 101: INNER RING
- 101a: OUTER CIRCUMFERENTIAL TRACK SURFACE
- 102: OUTER RING
- 102a: INNER CIRCUMFERENTIAL TRACK SURFACE
- 104, 104A, 104B, 104C, 104D, 104E: RETAINER CAGE
- 110: RETAINING PORTION
- 111: FACING WALL
- 112: BOTTOM WALL
- 113: POCKET
- 114: FIRST FACING WALL
- 115: SECOND FACING WALL
- 120, 120A, 120B, 120C, 120D, 120E: RETAINING PORTION JOINT
- 180: BEARING DEVICE

## Claims

1. A retainer cage comprising:
a plurality of columns disposed between an inner ring and an outer ring of a bearing device, the columns provided at equal intervals in a circumferential direction around an axis of the inner ring; and
a plurality of column joints connecting the columns to each other,
wherein a portion between the plurality of columns forms a pocket in which a ball is disposed,
the column has an end surface facing one direction out of axial directions parallel to the axis, and
the end surface has a recess recessed to another direction out of the axial directions.

2. The retainer cage according to claim 1,
wherein the column has an opening that opens the recess inward in a radial direction.

3. The retainer cage according to claim 1 or 2,
wherein the column has a distal end wall to be a bottom wall of the recess, and
the distal end wall is disposed to be shifted from a center of the ball in the axial directions.

4. The retainer cage according to any one of claims 1 to 3,
wherein the column is provided with a through hole penetrating in the radial direction.

5. A retainer cage comprising:
a plurality of retaining portions disposed between an inner ring and an outer ring of a bearing device, the retaining portions provided at equal intervals in a circumferential direction around an axis of the inner ring; and
a plurality of retaining portion joints connecting the retaining portions to each other,
wherein the retaining portion includes:
a bottom wall extending in the circumferential direction; and
a pair of facing walls extending in axial directions parallel to the axis from both ends of the bottom wall in the circumferential direction,
a space between the pair of facing walls forms a pocket in which a ball is disposed,
a thickness of the retaining portion joint in a radial direction is smaller than a thickness of the facing wall in the radial direction when viewed in the axial directions, and
when viewed in the axial directions, a central portion of the retaining portion joint in the radial direction is disposed to be shifted inward in the radial direction or outward in the radial direction with respect to a virtual circle passing through a center of each ball.

6. The retainer cage according to claim 5,
wherein, when viewed in the axial directions, the central portion of the retaining portion joint in the radial direction is disposed to be shifted outward in the radial direction with respect to the virtual circle passing through the center of each ball.

7. The retainer cage according to claim 5 or 6,
wherein the retaining portion joint is bent.

8. A retainer cage comprising:
a plurality of retaining portions disposed between an inner ring and an outer ring of a bearing device, the retaining portions provided at equal intervals in a circumferential direction around an axis of the inner ring; and
a plurality of retaining portion joints connecting the retaining portions to each other,
wherein the retaining portion includes:
a bottom wall extending in the circumferential direction; and
a pair of facing walls extending in axial directions parallel to the axis from both ends of the bottom wall in the circumferential direction,
a space between the pair of facing walls forms a pocket in which a ball is disposed, and
the retaining portion joint is bent.

9. A bearing device comprising:
an inner ring having an outer circumferential track surface on an outer circumferential surface;
an outer ring having an inner circumferential track surface on an inner circumferential surface;
a plurality of balls disposed between the outer circumferential track surface and the inner circumferential track surface; and
the retainer cage according to any one of claims 1 to 8.
